# EUROPÄISCHE PATENTSCHRIFT

(11) **EP 2 929 775 B1**
(45) Veröffentlichungstag und Bekanntmachung des Hinweises auf die Patenterteilung: **30.01.2019**
(21) Anmeldenummer: 15154406.1
(22) Anmeldetag: 10.02.2015
(51) Int. Cl.: A01F 15/04, B30B 9/30

(54) **Quaderballenpresse**
Square baler
Presse à balles parallélépipédiques

(30) Priorität: 07.04.2014 DE 102014004920
(43) Veröffentlichungstag der Anmeldung: 14.10.2015
(73) Patentinhaber: Usines Claas France S.A.S, 57140 St. Rémy / Woippy (FR)
(72) Erfinder: Hesselmann, Ulrich, 54439 Saarburg (DE); Scharf, Thorsten, 66693 Mettlach (DE); Birkhofer, Stefan, 78333 Stocknach (DE)
(74) Vertreter: CLAAS Gruppe

(56) Entgegenhaltungen:
- GB-A- 398 144
- US-A- 4 829 756
- US-A- 4 945 719
- US-A1- 2010 242 749

## Beschreibung

Die vorliegende Erfindung betrifft eine Quaderballenpresse mit der landwirtschaftliches Erntegut wie etwa Stroh, Heu oder Silage zu quaderförmigen Ballen gepresst wird. Eine solche Ballenpresse mit einem Presskanal und einem in dem Presskanal zum Verdichten von Pressgut oszillierend beweglichen Kolben ist zum Beispiel aus DE 10 2010 037 722 A1 bekannt. Eine Quaderballenpresse, die alle Merkmale des Oberbegriffs des Anspruchs 1 offenbart, ist aus US 2010/0242749 A1 bekannt.

Damit das in einer solchen Presse verdichtete Erntegut beim Verlassen des Presskanals seine Ballenform behält, müssen die Ballen im Presskanal mit Bindegarn umwickelt und das Bindegarn verknotet werden. Dieses Bindegarn zieht sich während der Entstehung eines Ballens an dessen Flanken und seiner vom Presskolben abgewandten Rückseite entlang. Wenn der Ballen fertig ist, muss das Bindegarn, um verknotet werden zu können, auch an der dem Presskolben zugewandten Vorderseite des Ballens verlegt werden. Zu diesem Zweck ist es bekannt, den Presskolben mit sogenannten Nadelschlitzen zu versehen, die zum Ballen hin offen sind und durch die Nadeln, die das Bindegarn führen, hindurchbewegt werden können, während der Presskolben den Ballen unter Druck hält.

Jedes Mal, wenn der Presskolben von der Vorderseite des neu entstehenden Ballens beabstandet ist, wird neues Pressmaterial in den Presskanal eingeführt, so dass der Ballen länger wird und das sich an Flanken und Rückseite des Ballens entlang ziehende Bindegarn am Ballen entlang verrutschen muss. Dabei ist das Bindegarn bei jeder Pressbewegung des Kolbens erheblichen Spannungen ausgesetzt. Wenn diese dazu führen, dass Bindegarn reißt oder aus seiner Halterung entweicht, kann der Ballen nicht mehr verknotet werden. Dann muss der Betrieb der Ballenpresse unterbrochen und der Presskanal entleert werden, was eine erhebliche Produktivitätseinbuße mit sich bringt. Die Gefahr des Reißens lässt sich zwar durch Verwendung eines stärkeren Garns verringern, doch ist dies zum einen mit erhöhten Kosten für das Garn verbunden, und zum anderen erschwert ein solches starkes Garn zu einem späteren Zeitpunkt das Aufschneiden der Ballen. Außerdem verringert die Verwendung eines starken Garns nicht die Gefahr, dass das Garn während des Verdichtens aus seiner Halterung herausgerissen wird.

Es besteht daher Bedarf nach einer Quaderballenpresse und einem Verfahren zum Erzeugen von Ballen, mit denen eine starke Verdichtung des Pressguts erreichbar ist und dennoch die Gefahr eines Reißens oder Entweichens von Bindegarn aus seiner Halterung minimiert ist.

Die Aufgabe wird durch die Merkmale des Anspruchs 1 gelöst.

Mit einer solchen Quaderballenpresse kann das Pressgut im Presskanal zu einem Presskörper verdichtet werden, in welchem über die Breite des Presskanals hinweg Zonen hoher Verdichtung und Zonen niedriger Verdichtung alternieren. Indem das Bindegarn rings um eine Zone niedriger Dichte verlegt und verknotet wird, kann die Spannung bzw. Reibung, der das Bindegarn während des Verdichtungsvorgangs ausgesetzt ist, trotz im Mittel hoher Dichte des Ballens vergleichsweise niedrig gehalten werden, so dass die Gefahr eines Reißens des Bindegarns oder Entweichens aus seiner Halterung verringert ist.

Typischerweise weist der Presskolben mehrere nebeneinander verlaufende Nadelschlitze auf. Da an jedem dieser Nadelschlitze die Verdichtung des Ballens relativ gering sein sollte, sollte der hoch verdichtende beabstandete Bereich wenigstens eines der Kolbenstege vorzugsweise ein mittiger Bereich des Kolbenstegs sein, der sich zwischen den Nadelschlitzen und beabstandet von beiden erstreckt.

Die hohe Verdichtung des Pressguts ist dadurch erreichbar, dass der beabstandete Bereich über den an den ersten Nadelschlitz angrenzenden Randbereich seines Kolbenstegs in Richtung des Pressguts übersteht.

Um eine hohe Verdichtung an dem beabstandeten Bereich des Kolbenstegs ausgesetzten Pressguts zu erzielen, ist es ferner nützlich, wenn im Laufe der Verdichtung Pressgut quer zur Bewegungsrichtung des Kolbens zu den hoch verdichteten Zonen des Ballens hin verlagert wird. Eine solche Verlagerung kann, wie später noch genauer erläutert, dadurch unterstützt werden, dass der Randbereich Teil einer Konkavität des Kolbenstegs ist, die sich zwischen einer an den Nadelschlitz angrenzenden Kante des Kolbenstegs und dem beabstandeten Bereich erstreckt. Der Randbereich kann eine senkrecht zur Bewegungsrichtung des Presskolbens orientierte Planfläche umfassen, die vorzugsweise Teil der oben erwähnten Konkavität ist.

Die Konkavität kann ferner durch eine Seitenwand des beabstandeten Bereichs begrenzt sein. Um die Seitwärtsverlagerung von Pressgut zu der hoch verdichteten Zone zu fördern, sollte eine Oberflächennormale der Seitenwand vorzugsweise rechtwinklig zur Bewegungsrichtung des Kolbens, wenigstens aber unter einem Winkel von 60° zu dieser, orientiert sein.

Die Breite des beabstandeten Bereichs sollte klein im Vergleich zur Breite des Kolbenstegs sein und vorzugsweise kleiner als der Abstand zwischen dem beabstandeten Bereich und einem benachbarten Nadelschlitz.

Um eine ausreichende Inhomogenität der Verdichtung zwischen hoch und niedrig verdichteten Zonen zu erzielen, entspricht der Überstand des beabstandeten Bereichs eines Kolbenstegs über den dazu benachbarten Randbereich wenigstens einem Viertel der Breite des Kolbenstegs.

Der beabstandete Bereich sollte das Pressgut nicht durchschneiden, da dann keine Verlagerung des Pressguts quer zur Bewegungsrichtung des Kolbens mehr möglich ist. Er sollte daher nicht messerartig ausgebildet sein, sondern eine dem Pressgut zugewandte ebene oder konkave Scheitelfläche aufweisen.

Der Kolbensteg kann insbesondere als ein U-Profil ausgebildet sein, dessen Schenkel vom Pressgut abgewandt sind und die Nadelschlitze des Kolbens begrenzen.

Der beabstandete Bereich kann dann durch wenigstens eine an ein Mittelstück des U-Profils angeformte Rippe gebildet sein.

Alternativ kann der beabstandete Bereich separat vom Kolbensteg insbesondere durch ein an den Kolbensteg angefügtes T- oder U-Profil gebildet sein. Ein solches Profil hat insbesondere den Vorteil, dass herkömmliche Quaderballenpressen mit einem solchen Profil auf einfache Weise nachgerüstet werden können.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine Seitenansicht einer erfindungsgemäßen Ballenpresse;
- Fig. 2: einen schematischen Längsschnitt des Presskanals der Ballenpresse aus Fig. 1;
- Fig. 3: eine schematische Darstellung eines Presskolbens gemäß einer ersten Ausgestaltung;
- Fig. 4: eine zu Fig. 3 analoge Ansicht gemäß einer zweiten Ausgestaltung; und
- Fig. 5: eine zu Fig. 3 analoge Ansicht gemäß einer dritten Ausgestaltung.

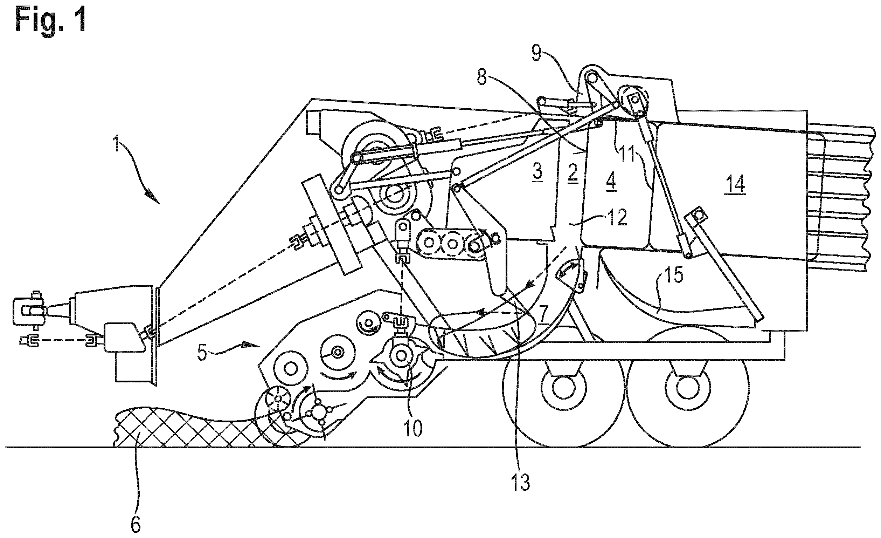

Die in Fig. 1 in schematischer Seitenansicht gezeigte Kolbenpresse 1 ist als Anhänger ausgelegt, der an ein nicht dargestelltes Zugfahrzeug angekoppelt und von einer Zapfwelle desselben angetrieben wird. Sie umfasst eine Aufnahmevorrichtung 5, auch als Pickup bezeichnet, zum Aufnehmen von Erntegut 6 vom Boden, eine Schneidvorrichtung 10 zum Zerkleinern des Ernteguts, einen Presskanal 2 und einen Zuführkanal 7, der die Schneidvorrichtung 10 mit dem Presskanal 2 verbindet. Die Fig. 1 zeigt einen in dem Presskanal 2 oszillierend beweglichen Presskolben 3 in einer zurückgezogenen Stellung, in der er einen Durchgang 12 vom Zuführkanal 7 zum Presskanal 2 freigibt.

Rafferzinken 13 sind auf einer teils außerhalb des Zuführkanals 7 verlaufenden, teils durch Schlitze in einer Wand des Zuführkanals 7 in diesen eingreifenden Bahn beweglich, um von der Schneidvorrichtung 10 in den Zuführkanal 7 eingespeistes Erntegut durch den offenen Durchgang 12 in den Presskanal 2 zu schieben, wo es von einer nachfolgenden Pressbewegung des Presskolbens 3 gegen einen in Bildung befindlichen Ballen 4 angepresst und verdichtet wird.

Oberhalb des Presskanals 2, etwa in Höhe der dem Presskolben 3 zugewandten Stirnfläche 8 des Ballens 4, ist ein an sich bekannter Knoter 9 angeordnet, an dem das Ende eines Bindegarnstrangs 11 geklemmt ist. Der Bindegarnstrang 11 erstreckt sich entlang einer Oberseite des Ballens 4, über seine einem bereits fertigen Ballen 14 zugewandte Rückseite, an der Unterseite des Ballens 4 entlang zur Spitze einer Knoternadel 15 und von dort zu einem nicht gezeigten Garnvorrat.

Wenn der Ballen 4 eine Sollgröße erreicht hat, wird die Knoternadel 15 aufwärts geschwenkt, um den Bindegarnstrang auch über die Stirnfläche 8 des Ballens 4 bis hoch zum Knoter 9 zu ziehen, so dass er vom Knoter 9 durchtrennt und mit dem dort festgehaltenen Ende des Strangs verknotet werden kann. Diese Aufwärtsbewegung der Knoternadel 15 verläuft durch Nadelschlitze, die in der Stirnseite des Presskolbens 3 ausgespart sind.

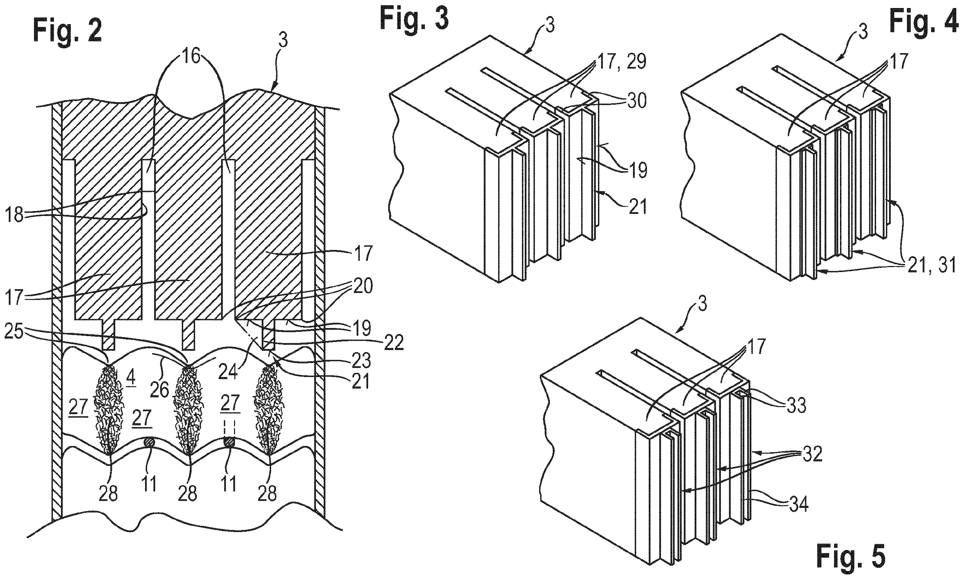

Fig. 2 zeigt einen Schnitt durch den Presskanal 2 entlang einer in dessen Längsrichtung verlaufenden Ebene. In der schematischen Darstellung der Fig. 2 ist der Presskolben 3 durch nur zwei Nadelschlitze 16 in drei Kolbenstege 17 gegliedert; in der Praxis ist deren Zahl im Allgemeinen größer. Die Nadelschlitze 16 sind hier mit ebenen, sich in Bewegungsrichtung des Presskolbens 3 erstreckenden Seitenwänden 18 dargestellt. Um das Eindringen von Pressgut in die Nadelschlitze 16 zu minimieren, können die Nadelschlitze 16 auch eine hinterschnittene Form aufweisen, deren Breite in einem hinteren Bereich groß genug ist, um die Knoternadeln 15 durchzulassen, wohingegen in einem vorderen Bereich, in Höhe der Kolbenstege 17, die Breite der Nadelschlitze 16 allenfalls noch ausreicht, um den von der Knoternadel 15 in den Nadelschlitz 16 eingeführten Bindegarnstrang 11 austreten zu lassen.

Die Kolbenstege 17 weisen jeweils zwei dem Ballen 4 zugewandte Planflächen 19 auf, die senkrecht zur Bewegungsrichtung des Presskolbens 3 orientiert sind und an Kanten 20 auf die Seitenwände 18 der Nadelschlitze 16 treffen. In einem von den Kanten 20 beabstandeten Bereich 21, jeweils in der Mitte der Kolbenstege 17, ist eine über die Planflächen 19 vorspringende Rippe mit Flanken 22 und einer Scheitelfläche 23 gebildet. Die Planflächen 19 und Flanken 22 bilden jeweils zusammen eine sich über die gesamte Höhe eines Kolbenstegs 17 erstreckende Konkavität 24, in der die Oberfläche des Presskolbens 3 hinter eine gedachte Verbindungslinie zwischen einer Kante 20 und einem benachbarten Rand der Scheitelfläche 23 zurückspringt.

Wenn der Presskolben 3 gegen den Ballen 4 vorrückt, gelangen zunächst die Stirnflächen 23 des Bereichs 21 in Kontakt und formen Rinnen 25 in der Stirnfläche 8 des Ballens 4. Eine Folge dieser Verformung ist, dass ein Halm 26 des Ernteguts, der die Scheitelfläche 23 eines der Kolbenstege 17 kreuzt, von der Scheitelfläche 23 tief in den Ballen 4 hineingedrückt wird, wobei der Halm 26 geknickt wird und sich beiderseits der Scheitelfläche 23 an die Flanken 22 anschmiegt. Auf diese Weise wird innerhalb des Ballens 4 Erntegut quer zur Bewegungsrichtung des Presskolbens 3 aus einer einem Nadelschlitz 16 und daran angrenzenden Planflächen 19 gegenüberliegenden Zone 27 in eine der Scheitelfläche 23 gegenüberliegende Zone 28 verlagert, so dass, wenn der Ballen 4 fertiggestellt ist, sich über dessen Breite hinweg Zonen 28 hoher Verdichtung mit Zonen 27 geringerer Verdichtung abwechseln.

Da die Bindegarnstränge 11 jeweils in einer mit den Nadelschlitzen 16 fluchtenden Ebene, rings um eine Zone 27 geringer Verdichtung, verlaufen, ist der Druck des Ballens 4, dem sie ausgesetzt sind, relativ gering, so dass das Bindegarn rings um den Ballen 4 verrutschen kann, wenn dieser durch laufend zugeführtes Erntegut wächst und sich dabei im Presskanal 2 ausdehnt. So kann trotz im Mittel hoher Verdichtung des Pressguts im Ballen 4 die Belastung des Bindegarns in Grenzen gehalten und die Gefahr eines Reißens oder eines Entweichens aus der Halterung am Knoter 9 gering gehalten werden.

Fig. 3 zeigt den Presskolben 3 in einer schematischen, perspektivischen Ansicht gemäß einer ersten Ausgestaltung. Die Kolbenstege 17 sind hier jeweils durch Strangpressprofile 29 gebildet. Die Strangpressprofile 29 sind hier modifizierte U-Profile mit einem die Planflächen 19 bildenden Mittelstück und zumindest Teile der Seitenwände 18 der Nadelschlitze 16 bildenden, sich rechtwinklig zum Mittelstück erstreckenden äußeren Schenkeln 30, bei denen eine den beabstandeten Bereich 21 bildende Rippe von dem Mittelstück mittig in zu den äußeren Schenkeln 30 entgegengesetzter Richtung absteht.

Bei der Ausgestaltung der Fig. 4 ist der beabstandete Bereich 21 durch ein T-Profil 31 gebildet, das an dem - hier als herkömmliches U-Profil ausgebildeten - Kolbensteg 17 durch Schrauben, Nieten oder dergleichen angefügt ist. Es liegt auf der Hand, dass ein solches T-Profil 31 allgemein bei einem herkömmlichen Presskolben mit ebenen Kolbenstegen 17 zwischen den Nadelschlitzen 16 problemlos nachgerüstet werden kann, um die vorliegende Erfindung auch in einer herkömmlichen Ballenpresse realisieren zu können.

In Fig. 5 ist das T-Profil 31 durch ein U-Profil 32 ersetzt, dessen Mittelstück am Kolbensteg 17 verschraubt, vernietet oder in anderer geeigneter Weise befestigt ist und dessen äußere Schenkel 33 in Richtung des Ballens 4 abstehen. Der Abstand zwischen den Schenkeln 33 des U-Profils 32 ist gering, ähnlich der Breite der Nadelschlitze 16, so dass das Pressgut im Wesentlichen nicht in den Zwischenraum zwischen den Schenkeln 33 eindringt und die dem Ballen 4 zugewandten Kanten 34 der beiden Schenkel 33 als eine einzige konkave Scheitelfläche, analog zur Scheitelfläche 23 aufgefasst werden können, deren Wirkung auf das Pressgut auch im Wesentlichen der der ebenen Scheitelfläche 23 entspricht.

### Bezugszeichen

- 1: Ballenpresse
- 2: Presskanal
- 3: Presskolben
- 4: Ballen
- 5: Aufnahmevorrichtung
- 6: Erntegut
- 7: Zuführkanal
- 8: Stirnfläche
- 9: Knoter
- 10: Schneidvorrichtung
- 11: Bindegarnstrang
- 12: Durchgang
- 13: Rafferzinken
- 14: Ballen
- 15: Knoternadel
- 16: Nadelschlitz
- 17: Kolbensteg
- 18: Seitenwand
- 19: Planfläche
- 20: Kante
- 21: beabstandeter Bereich
- 22: Flanke
- 23: Scheitelfläche
- 24: Konkavität
- 25: Rinne
- 26: Halm
- 27: Zone geringer Verdichtung
- 28: Zone hoher Verdichtung
- 29: Strangpressprofil
- 30: äußerer Schenkel
- 31: T-Profil
- 32: U-Profil
- 33: äußerer Schenkel
- 34: Kante

## Patentansprüche

1. Quaderballenpresse mit einem Presskanal (2), einem in dem Presskanal (2) zum Verdichten von Pressgut oszillierend beweglichen Presskolben (3), dessen dem Pressgut zugewandte Stirnseite in durch Nadelschlitze (16) voneinander getrennte Kolbenstege (17) gegliedert ist, wobei wenigstens ein erster Nadelschlitz (16) von Kolbenstegen (17) flankiert ist, die quer zu dem ersten Nadelschlitz (16) eine Profilierung aufweisen, die in einem an den ersten Nadelschlitz (16) angrenzenden Randbereich (19) der Kolbenstege (17) eine schwächere Verdichtung des Pressguts bewirkt als in einem von dem ersten Nadelschlitz (16) beabstandeten Bereich (21) der Kolbenstege (17), **dadurch gekennzeichnet, dass** der Überstand des beabstandeten Bereichs (21) eines Kolbenstegs (17) über den benachbarten Randbereich (19) wenigstens einem Viertel der Breite des Kolbenstegs (17) entspricht.

2. Quaderballenpresse nach Anspruch 1, **dadurch gekennzeichnet, dass** der beabstandete Bereich (21) wenigstens eines der Kolbenstege (17) ein mittiger Bereich des Kolbenstegs (17) ist, der sich zwischen dem ersten und einem zweiten Nadelschlitz (16) erstreckt.

3. Quaderballenpresse nach Anspruch 1 oder 2, **dadurch gekennzeichnet, dass** der beabstandete Bereich (21) über den an den ersten Nadelschlitz (16) angrenzenden Randbereich (19) hinaus in Richtung des Pressguts übersteht.

4. Quaderballenpresse nach Anspruch 3, **dadurch gekennzeichnet, dass** der Randbereich (19) Teil einer Konkavität (24) des Kolbenstegs (17) ist, die sich zwischen einer an den Nadelschlitz (16) angrenzenden Kante (20) des Kolbenstegs (17) und dem beabstandeten Bereich (21) erstreckt.

5. Quaderballenpresse nach einem der vorhergehenden Ansprüche, **dadurch gekennzeichnet, dass** der Randbereich (19) eine senkrecht zur Bewegungsrichtung des Presskolbens (3) orientierte Planfläche (19) umfasst.

6. Quaderballenpresse nach Anspruch 4, **dadurch gekennzeichnet, dass** die Konkavität (24) ferner durch eine Flanke (22) des beabstandeten Bereichs (21) begrenzt ist.

7. Quaderballenpresse nach Anspruch 6, **dadurch gekennzeichnet, dass** eine Oberflächennormale der Flanke (22) unter einem Winkel von mindestens 60°, vorzugsweise rechtwinklig, zur Bewegungsrichtung des Presskolbens (3) orientiert ist.

8. Quaderballenpresse nach einem der vorhergehenden Ansprüche, **dadurch gekennzeichnet, dass** die Breite des beabstandeten Bereichs (21) kleiner ist als der Abstand zwischen dem beabstandeten Bereich (21) und einem benachbarten Nadelschlitz (16).

9. Quaderballenpresse nach einem der vorhergehenden Ansprüche, **dadurch gekennzeichnet, dass** der beabstandete Bereich (21) eine ebene oder konkave, dem Pressgut zugewandte Scheitelfläche (23) aufweist.

10. Quaderballenpresse nach einem der vorhergehenden Ansprüche, **dadurch gekennzeichnet, dass** der Kolbensteg (17) durch ein U-Profil (29) mit vom Pressgut abgewandten Schenkeln (30) gebildet ist.

11. Quaderballenpresse nach Anspruch 10, **dadurch gekennzeichnet, dass** der beabstandete Bereich (21) durch wenigstens eine an ein Mittelstück des U-Profils (29) angeformte Rippe gebildet ist.

12. Quaderballenpresse nach einem der vorhergehenden Ansprüche, **dadurch gekennzeichnet, dass** der beabstandete Bereich (21) durch ein an den Kolbensteg (17) angefügtes T- oder U-Profil (31, 32) gebildet ist.

13. Verfahren zum Erzeugen eines Ballens (4) aus Pressgut mit einer Quaderballenpresse gemäß Anspruch 1, mit den Schritten:
a) Verdichten von Pressgut in einem Presskanal (2) zu einem Presskörper, in dem über die Breite des Presskanals (2) hinweg Zonen (28) hoher Verdichtung und Zonen (27) niedriger Verdichtung alternieren; und
b) Verlegen von Bindegarn (11) rings um die Zonen (27) niedriger Dichte und Verknoten des Bindegarns (11) .

## Claims

1. Square baler with a bale chamber (2), a baling ram (3) movable in the bale chamber (2) in an oscillating manner for compressing bale material, the end face of which facing the bale material is divided into ram segments (17) separated from each other by needle slots (16), wherein at least a first needle slot (16) is flanked by ram segments (17) which transversely to the first needle slot (16) have a profiling which brings about a weaker compression of the bale material in an edge region (19) of the ram segments (17) adjacent to the first needle slot (16) than in a region (21) of the ram segments (17) spaced apart from the first needle slot (16), **characterized in that** the projection of the spaced-apart region (21) of a ram segment (17) beyond the adjacent edge region (19) corresponds to at least a quarter of the width of the ram segment (17).

2. Square baler according to claim 1, **characterized in that** the spaced-apart region (21) of at least one of the ram segments (17) is a central region of the ram segment (17), which extends between the first and a second needle slot (16).

3. Square baler according to claim 1 or 2, **characterized in that** the spaced-apart region (21) projects beyond the edge region (19) adjacent to the first needle slot (16) in the direction of the bale material.

4. Square baler according to claim 3, **characterized in that** the edge region (19) is part of a concavity (24) of the ram segment (17) which extends between an edge (20) of the ram segment (17) adjacent to the needle slot (16) and the spaced-apart region (21).

5. Square baler according to one of the preceding claims, **characterized in that** the edge region (19) comprises a planar surface (19) oriented perpendicularly to the direction of movement of the baling ram (3).

6. Square baler according to claim 4, **characterized in that** the concavity (24) is further bordered by a flank (22) of the spaced-apart region (21).

7. Square baler according to claim 6, **characterized in that** a surface normal of the flank (22) is oriented at an angle of at least 60°, preferably at right angles, relative to the direction of movement of the baling ram (3) .

8. Square baler according to one of the preceding claims, **characterized in that** the width of the spaced-apart region (21) is smaller than the distance between the spaced-apart region (21) and an adjacent needle slot (16) .

9. Square baler according to one of the preceding claims, **characterized in that** the spaced-apart region (21) has a flat or concave apex surface (23) facing the bale material.

10. Square baler according to one of the preceding claims, **characterized in that** the ram segment (17) is formed by a U-shaped profile (29) with legs (30) facing away from the bale material.

11. Square baler according to claim 10, **characterized in that** the spaced-apart region (21) is formed by at least one rib moulded onto a central piece of the U-shaped profile (29) .

12. Square baler according to one of the preceding claims, **characterized in that** the spaced-apart region (21) is formed by a T- or U-shaped profile (31, 32) joined to the ram segment (17).

13. Method for producing a bale (4) from bale material with a square baler according to claim 1, with the steps of:
a) compressing bale material in a bale chamber (2) to form a compressed body in which zones (28) of high compression and zones (27) of low compression alternate across the width of the bale chamber (2); and
b) placing twine (11) around the zones (27) of low density and knotting the twine (11).

## Revendications

1. Presse à balles parallélépipédiques comprenant un canal de pressage (2), un piston de pressage (3) qui est mobile de façon oscillante dans le canal de pressage (2) pour compacter le produit à presser et dont le côté frontal tourné vers le produit à presser est divisé en barrettes de piston séparées les unes des autres par des fentes, au moins une première fente (16) étant flanquée de barrettes de piston (17) qui présentent, transversalement à la première fente (16), un profilage qui produit, dans une région de bord (19) des barrettes de piston (17) adjacente à la première fente (16), un compactage plus faible du produit à presser que dans une région (21) des barrettes de piston (17) distante de la première fente (16), **caractérisée en ce que** le dépassement de la région distante (21) d'une barrette de piston (17) au-delà de la région de bord voisine (19) correspond au moins à un quart de la largeur de la barrette de piston (17).

2. Presse à balles parallélépipédiques selon la revendication 1, **caractérisée en ce que** la région distante (21) d'au moins une des barrettes de piston (17) est une région centrale de la barrette de piston (17), laquelle s'étend entre la première et une deuxième fente (16).

3. Presse à balles parallélépipédiques selon la revendication 1 ou 2, **caractérisée en ce que** la région distante (21) dépasse de la région de bord (19), adjacente à la première fente (16), en direction du produit à presser.

4. Presse à balles parallélépipédiques selon la revendication 3, **caractérisée en ce que** la région de bord (19) fait partie d'une concavité (24) de la barrette de piston (17), laquelle s'étend entre un bord (20) de la barrette de piston (17) adjacent à la fente (16) et la région distante (21) .

5. Presse à balles parallélépipédiques selon une des revendications précédentes, **caractérisée en ce que** la région de bord (19) comprend une surface plane (19) orientée perpendiculairement à la direction de déplacement du piston de pressage (3) .

6. Presse à balles parallélépipédiques selon la revendication 4, **caractérisée en ce que** la concavité (24) est, en outre, limitée par un flanc (22) de la région distante (21).

7. Presse à balles parallélépipédiques selon la revendication 6, **caractérisée en ce qu'**une normale à la surface du flanc (22) est orientée selon un angle d'au moins 60°, de préférence à angle droit, par rapport à la direction de déplacement du piston de pressage (3).

8. Presse à balles parallélépipédiques selon une des revendications précédentes, **caractérisée en ce que** la largeur de la région distante (21) est inférieure à la distance entre la région distante (21) et une fente voisine (16).

9. Presse à balles parallélépipédiques selon une des revendications précédentes, **caractérisée en ce que** la région distante (21) présente une surface de sommet (23) plane ou concave orientée vers le produit à presser.

10. Presse à balles parallélépipédiques selon une des revendications précédentes, **caractérisée en ce que** la barrette de piston (17) est formée par un profil en U (29) avec des ailes (30) orientées à l'opposé du produit à presser.

11. Presse à balles parallélépipédiques selon la revendication 10, **caractérisée en ce que** la région distante (21) est formée par au moins une nervure surmoulée sur une portion centrale du profil en U (29).

12. Presse à balles parallélépipédiques selon une des revendications précédentes, **caractérisée en ce que** la région distante (21) est formée par un profil en T ou en U (31, 32) rapporté sur la barrette de piston (17).

13. Procédé de fabrication d'une balle (4) à partir de produit à presser à l'aide d'une presse à balles parallélépipédiques selon la revendication 1, comprenant les étapes consistant à :
a) compacter du produit à presser dans un canal de pressage (2) pour obtenir un corps pressé dans lequel des zones (28) à haut compactage et des zones (27) à bas compactage alternent sur toute la largeur du canal de pressage (2) ; et
b) passer de la ficelle de liage (11) tout autour des zones (27) de basse densité et à nouer la ficelle de liage (11).
